Europäisches Patentamt

European Patent Office

Office européen des brevets

(11) Publication number: **0 481 228 A2**

## EUROPEAN PATENT APPLICATION

(21) Application number: **91115729.5**

(22) Date of filing: **17.09.91**

(51) Int. Cl.5: **C08G 59/40**, C08L 63/00, C08K 3/04, C09D 5/44, C08J 3/24

(30) Priority: **17.10.90 US 599181**

(43) Date of publication of application: **22.04.92 Bulletin 92/17**

(84) Designated Contracting States: **BE CH DE DK ES FR GB GR IT LI NL SE**

(71) Applicant: **AMERICAN CYANAMID COMPANY 1937 West Main Street P.O. Box 60 Stamford Connecticut 06904-0060(US)**

(72) Inventor: **Hajek, Miroslov 821 Randolph Drive Aberdeen, Maryland 21001(US)** Inventor: **Bristowe, William W. 3328 Altamont Drive Wilmington, Delaware 19810(US)**

(74) Representative: **Wächtershäuser, Günter, Dr. Tal 29 W-8000 München 2(DE)**

(54) **Induction curing electro-coatable seam filler.**

(57) A synthetic epoxy-based resin seam filler is disclosed.

EP 0 481 228 A2

FIELD OF THE INVENTION

The invention relates to improvements in synthetic epoxy-based resin seam filler compositions.

CROSS REFERENCE TO RELATED APPLICATION

This application is related to commonly assigned U.S. Serial Number 07/517,981, filed May 2, 1990.

BACKGROUND OF THE INVENTION

U.S. Patent No. 4,273,686 described rapid cure epoxy resin based compositions using orthophenylenebis (3,3-dimethylurea), sometimes called 1,1',o-phenylenebis (3,3-dimethylurea) in combination with dicyandiamide as cure catalysts, also called cure accellerators, to achieve rapid cure of the epoxide. In addition to the prepolymers and catalysts, in those compositions fillers such as aluminum powder and calcium carbonate were included to adapt the compositions for use as substitutes for metal solders to fill metal seams in automobile body manufacture. Cured resin seam fillers are preferred over metal solders because the former can be applied at relatively lower temperatures. At temperatures necessary for applying metal solder, e.g. a silicone bronze solder, distortion of the sheet metal near the seam may occur. Such distortion is practically eliminated with the use of cured resin fillers, which do not require such high temperatures.

Development of faster assembly lines and the introduction of electrocoating for the application of paint and primers in auto body manufacture, have caused the need for further improvement of synthetic resin substitutes for solder for filling metal seams. The invention provides seam filler compositions capable of faster cure, and that can be sanded to very smooth surface finish, and that can accept paint or primer applied by electrocoating.

SUMMARY OF THE INVENTION

The present invention is directed to a rapid cure thermosetting epoxy resin composition which can be applied to fill a sheet metal seam and which when cured to green strength can be abraded to a smooth surface and coated on such surface by electrocoating, said composition comprising
a. a mixture of
  1. at least one polyepoxide having more than one 1,2-epoxy group,
  2. the reaction product of a polyepoxide and a polyoxyalkylenediamine,
  3. effective curing amounts of a bis urea curing accelerator and dicyandiamide, said mixture being subjected to reduced pressure prior to the addition of (b) and (c) thereto,
b. carbon black filler in amounts sufficient to impart surface conductivity to the cured resin for electrocoating of the cured resin surface, and
c. at least one other solid filler for improving the thixotropic property of the uncured composition.

DESCRIPTION OF THE INVENTION

The compositions of the invention comprise one or more cyclic polyepoxides having more than one reactive 1,2-epoxy groups, preferably having two such groups, of the kinds described in U.S Patent No. 4,273,686, and U.S. Patent No. 3,386,956 for example. Preferred are monomeric and polymeric polyepoxides of bisphenol-A or a substituted bisphenol-A, epoxy novolac resins and polyepoxides of tri(hydroxyphenyl) methane.In preferred embodiments of the invention the cyclic polyepoxide will constitute about 30 to 45 percent by weight of the seam filler composition.

In preferred embodiments, compositions of the invention further comprise at least one product of the addition reaction of a polyepoxide and a polyoxyalkylene polyamine, preferably a polyoxyalkylene diamine, in which the polymerized oxyalkylene units comprises 2-4 carbon atoms. Polyoxypropylene diamines having molecular weight in the range from about 300 to about 3000 are especially preferred and the most preferred of those has molecular weight about 2000. The selected polyamine is reacted with a polyepoxide which may be the same polyepoxide that makes up the remaining resin components of the composition, or may be a different cyclic polyepoxide selected from those described and included by reference in the above descriptions.

The epoxide-diamine adduct is used in the seam filler composition to improve impact strength and flexibility of the cured seam filler. A preferred adduct for this use is made by combining and reacting about 60 to 100 parts by weight of a bisphenol A polyepoxide resin such as Dow DER 331, or Shell EPON 828,, for example, with about 25 to 35 parts by weight with a polyoxypropylene diamine having molecular weight about 2000, such as Jeffamine 2000,, for example. The ingredients are reacted by gradually adding the diamine to the epoxide., usually at elevated temperature and with stirring. The addition reaction can proceed without catalyst. This adduct will be used to constitute about 20 to 30 percent of the total seam filler composition.

The invention provides synthetic resin body solder compositions which can be applied to fill metal seams and can be cured to at least green strength in one minute or less at a practical cure temperature. The cured resin composition can then be abraded, as by sanding or grinding to bring the seam filler surface flush with surfaces of the joined metal members at the seam. The cured and trimmed resin surface can then be fine sanded to a very smooth finish suitable for electrocoating.

The use of particulate carbon in seam filler compositions of the invention is important to impart electrical conductivity to the cured resin. For metal structures, e.g. automobile bodies, which are to be painted or primed by electrocoating, it is important that surfaces of the seam filler, like the metal surfaces, should accept the electrocoated paint or primer. To achieve this, the seam filler is made electrically conductive by incorporating carbon particles such as carbon black or graphite powder in the composition. The most preferred carbons are electrical grade carbon blacks such as, for example, "Printex XE-2" conductive carbon black obtained from De Gussa or "Black Pearl 2000" conductive carbon black obtained from Cabot. It is necessary to use sufficient carbon to impart surface conductivity to the cured resin filler surface in order for that surface to accept an electrocoat. Using electrical grade carbon black we have achieved electrocoating on a cured resin surface using only about 0.5% by weight of carbon based upon the total composition. It is preferred however to use about 3 to 10 percent, and most preferred 3 to 5 percent by weight, of carbon in the seam filler composition.

It is important to thoroughly and uniformly disperse the particulate carbon in the seam filler composition. In a preferred method to obtain thorough dispersion, the carbon may first be paint milled into all or a substantial portion of the resin components that will be used to make the seam filler composition. The thoroughly milled mixture of resin and carbon is then mixed into any remaining resin components, the other solid filler components are added and the curing accelerator is added.

A curing accelerator is included in the seam filler compositions of the invention to obtain rapid cure. Bis-urea curing accelerators used in combination with dicyandiamide or an equivalent such as those described in U.S. Patent No. 4,273,686, are preferred in compositions according to the invention. The most preferred bis-urea is orthophenylene bis(3,3-dimethylurea). With a sufficient amount of this preferred curing accelerator, preferably about 2 to 8%, in combination with about 2 to 8% by weight of dicyandiamide, a seam filler of the invention when applied can be cured to green strength in less than one minute by heating the filler at a curing temperature of about 180°C. By "green strength" as the term is used in this specification we mean that the filler composition when applied to fill a metal seam and cured with heat, has been hardened sufficiently so that it can be abraded by sanding or grinding to remove unwanted filler and produce a smooth surface finish. Additional curing, when needed, can be carried out by subsequent heating at cure temperature, as in a paint drying kiln for example.

In addition to particulate carbon filler, other solid particulate fillers may be added to a seam filler composition of the invention for various purposes. One or more fillers such as calcium carbonate and fumed silica may be added to impart desired thixotropic properties to the uncured seam filler. Other particulate fillers which are compatible with the resin ingredients and which may be used to reinforce the seam filler include aluminum powder, wood flour, metal oxides, gypsum, talc, asbestos, clays and other silicates, and the like. In especially preferred embodiments of the invention these solid fillers may constitute about 20 to 35 percent by weight of the seam filler composition, and will contain the following fillers in amounts shown:

7-15 percent by weight calciun carbonate
12-20 percent by weight aluminum powder
1-2 percent by weight talc, and
1-2 percent by weight fumed silica

During the compounding of the components of the claimed composition, a mixture of components a-c are subjected to reduced pressure. Preferably, it is subjected to pressures ranging from about 20 inches Hg to about 29 inches Hg. Most preferably, it is subjected to pressures ranging from about 27 inches Hg to about 29 inches Hg. It has been found that this procedure allows for the production of a cured product having a more uniform surface finish. This is thought to be due to the removal of entrapped air and/or other volatiles in the mixture which migrate out of the resin during curing thereof. The application of reduced pressure should be maintained for a period ranging from about 5 minutes to about 60 minutes, preferably from about 20 minutes to about 45 minutes.

The solid components of the claimed resin (components (d) and (e)) are passed through a screen of about 100 mesh (U.S.) and then added to the mixture of components (a)-(c) which have previously been subjected liquid to reduced pressure.

Other conventional epoxide additivies such as other thixotropic agents, dyes and pigments, flame retarding agents, and the like may be used.

After applying the seam filler, heat is applied to effect the initial cure to green strength. Heating is obtained by any suitable means such as infrared heating lamps, induction heating, or the like. Induction heating is preferred because a metal seam can be very rapidly heated to conduct heat to the applied seam filler, thereby rapidly raising the temperature of the seam filler to the cure temperature.

A preferred composition of the invention can be cured to green strength within one minute at 180°C.

The invention is described in more detail by reference to the following specific examples which include our most preferred embodiment of the invention. Percentages and parts are expressed in percent by weight or parts by weight unless specified otherwise.

EXAMPLE 1

To make an adduct of a polyepoxide and a polyoxyalkylene polyamine, 39.5 parts of a bisphenol A polyglycidyl ether (Shell EPON 828) is added to 10.5 parts of polyoxypropylene diamine having molecular weight about 2000, (Jeffamine D-2000) and the mixture was heated to 100°C and reacted at that temperature for one hour. The reaction product is referred to below as adduct 1. To make an adduct that will impart more flexibility than adduct 1, when used in a seam filler composition, the same procedure for reaction is carried out except using 35 parts EPON 828 and 15 parts Jeffamine D-2000.

EXAMPLE 2

To obtain a uniform dispersion of carbon in the seam filler composition, 67.5 parts of EPON 828 and 7.5 parts electrical grade carbon black, "Printex XE-2", are milled together in a paint mill for three passes to blend the mixture to a uniform dispersion of carbon in resin.

EXAMPLE 3

To make a seam filler composition, 50 parts of adduct 1 from Example 1 and 75 parts of the carbon-resin dispersion from example 2 are combined and thoroughly mixed. To the mixture is added a dry powder mixture of 20 parts calcium carbonate, 30 parts aluminum powder three parts magnesium silicate (talc) and three parts fumed silica. The dry ingredients are thoroughly mixed into the resin mixture and finally six parts orthophenylene bis (3,3-dimethylurea) and seven parts dicyandiamide are thoroughly mixed into the mixture.

EXAMPLE 4

Straight edges of two steel auto body sheets are joined to form a butt joint with a seam of 1-2mm width between the edges. The two sheets are spot welded at their margins along the seam to a metal strip running along the underside of the joint. The seam at the butt joint is filled with the joint filler composition of Example 3 by means of a caulking gun, leaving a slight bead of the filler standing along the seam. The seam filler is cured by magnetic induction heating of the metal along the length of the seam, which heats the seam filler to about 180°C. The seam filler is cured in less than one minute. The bead of cured resin is then abraded by sanding to bring its surface flush with the surfaces of the two metal sheets at the seam. A final fine sanding leaves a very smooth surface finish on the seam filler along the seam.

The joined sheets are immersed and electrocoated in an electrocoating bath of primer. The primer is electrocoated on the surface of the resin seam filler the same as on the metal. After applying and drying a paint finish coat over the primer, the filled seam is practically invisible. There is no discoloration or distortion of the paint finish at the seam.

**Claims**

1. A rapid cure thermosetting epoxy resin composition which can be applied to fill a sheet metal seam and which when cured to green strength can be abraded to a smooth surface and coated on such surface by electrocoating, said composition comprising
   a. a mixture of
      1. at least one polyepoxide having more than one 1,2-epoxy group,
      2. the reaction product of a polyepoxide and a polyoxyalkylenediamine,
      3. effective curing amounts of a bis urea curing accelerator and dicyandiamide, said mixture being subjected to reduced pressure prior to the addition of (b) and (c) thereto,
   b. carbon black filler in amounts sufficient to impart surface conductivity to the cured resin for electrocoating of the cured resin surface, and
   c. at least one other solid filler for improving the thixotropic property of the uncured composition.

2. A rapid cure resin based composition defined by Claim 1 wherein said curing accelerator comprises orthophenylene bis(3,3-dimethylurea) which is present along with said dicyandiamide in amounts sufficient for curing the resin to green strength within one minute at a temperature of at least 180°C, wherein cabon black is present in amounts of about 3% to 10% by weight, and said other fillers comprise calcium carbonate and aluminum powder.

3. The rapid cure resin of Claim 1 which has been subjected to reduce pressures ranging from about 20 to about 29 inch Hg.

4. The rapid cure resin of Claim 1 which has been subjected to pressures ranging from about 27 to about 29 inches Hg.

5. The rapid cure resin of Claim 3 wherein such pressure has been maintained for a period ranging from about 5 to about 60 minutes.

6. The rapid cure resin of Claim 4 wherein such pressure has been maintained for a period ranging from about 20 to about 45 minutes.

7. A rapid cure resin based composition defined by Claim 1 consisting essentially of:
   a. a mixture of
      1. 30 to 45 percent by weight bisphenol-A diglycidal ether
      2. 20 to 30 percent by weight of the reaction product of bisphenol-A diglycidal ether and polyoxypropylene diamine
      3. 2 to 8 percent by weight orthophenylene bis(3,3-dimethylurea) and 2 to 8 percent by weight dicyandiamide
   b. 3 to 5 percent by weight electrical grade carbon black
   c. 22 to 35 percent by weight solid fillers consisting of: 7-15 percent by weight calcium carbonate 12-20 percent by weight aluminum powder 1-2 percent by weight talc, and 1-2 percent by weight fumed silica.